# EUROPÄISCHE PATENTANMELDUNG

(11) **EP 1 354 687 A1**
(43) Veröffentlichungstag der Anmeldung: **22.10.2003**
(21) Anmeldenummer: 03008671.4
(22) Anmeldetag: 16.04.2003
(51) Int. Cl.: B29C 45/52, B29C 45/58

(54) **Rückströmsperre mit Mischelementen für eine Spritzgiessmaschine**

(30) Priorität: 20.04.2002 DE 10217758
(71) Anmelder: Krauss-Maffei Kunststofftechnik GmbH, 80997 München (DE)
(72) Erfinder: Würtele, Martin, 86316 Friedberg (DE)
(74) Vertreter: Wilhelm, Ludwig, Dipl.-Phys.

(57) **Zusammenfassung**

Beschrieben wird eine Rückstromsperre für die Einspritzschnecke eines Einspritzaggregates mit einem axial verschiebbaren Sperring (18), der zusammen mit einem Mittelstück (14) eines Schneckenkopfes (10) einen Ringspalt (22) bildet. Erfindungsgemäß wird vorgeschlagen, in dem Ringspalt (22) mindestens ein Mischelement (40) anzuordnen, das als Kreisring ausgebildet ist, der koaxial zum Sperrring (18) liegt und über den Umfang verteilte Bohrungen (42) für den Axialtransport von Material aufweist und/oder eine Stirnfläche (36) des Sperrrings (18) als Mischelement mit über den Umfang verteilten und in Umfangsrichtung versetzt zueinander liegenden Mischbohrungen (31,33) auszubilden.

## Beschreibung

Die Erfindung bezieht sich auf eine Rückstromsperre für Spritzgießmaschinen gemäß dem Oberbegriff des Patentanspruchs 1.

Derartige Rückstromsperren werden an einem ausstoßseitigen Ende einer plastifizierenden Schnecke in einem Einspritzzylinder angebracht und dienen als "Ventil", um zu verhindern, daß während eines Einspritzvorganges plastifiziertes Kunststoffmaterial zurück in den Schneckengang gepreßt wird.

Eine Rückstromsperre gemäß dem Oberbegriff des Patentanspruchs 1 ist aus der DE 198 36 871 bekannt. Bei dieser bekannten Rückstromsperre ist ein Sperring konzentrisch zu dem Mittelstück eines Schneckenkopfs zwischen einer Durchlaßstellung, in der er an einem Endstück des Schneckenkopfs anliegt, und einer Sperrstellung, in der er an einem Druckring des Schneckenkopfs anliegt, axial verschieblich. Der Sperring bildet zusammen mit dem Mittelstück einen Ringspalt und weist an seiner dem Endstück zugewandten Stirnseite Bohrungen für den Materialdurchlaß auf.

Ein derartiger Aufbau gestattet es, den Sperring am Schneckenkopf in einer gekapselten Lagerung drehbar zu lagern. Andererseits verzichtet dieser Aufbau bewußt auf einen Knetoder Mischeffekt, so daß die Rückstromsperre passierendes Material gegebenfalls nur unzureichend gemischt oder homogenisiert ist. Zur Lösung dieses Problems wird gemäß der DE 198 36 871 A1 vorgeschlagen, den Sperring so zu lagern, daß er in der Durchlaßstellung bei Drehung der Schnecke eine Axialoszillation durchführt. Diese Oszillation kann jedoch nur relativ klein sein, so daß es fraglich ist, ob hier eine ausreichende Mischwirkung erzielt wird.

Zur Verbesserung des Mischverhaltens ist aus der DE 21 62 709 A1 eine Rückströmsperre bekannt, bei der zum einen der Sperring über radial nach innen ragende Zähne und zum anderen der Schneckenschaft über radial nach aussen ragende Zähne verfügen. Die Zähne des Schneckenschafts sind derart axial zu den Zähnen des Sperrings versetzt sind, dass sich die Zähne von Sperring und Schneckenschaft bei der Hubbewegung des Sperrings von der Offenstellung in die Schließstellung und umgekehrt nicht ineinander verhaken können.
Damit die Zähne des Sperrings sich nicht zufällig in axialer Richtung mit den Zähnen des Schneckenschaftes überlappen, ist weiterhin vorgesehen, dass der Sperring in dem Plastifizierzylinder drehfest gelagert ist. Diese Rückströmsperre bietet zwar einen guten Mischeffekt, ist jedoch vergleichsweise aufwändig in der Herstellung.

Ausgehend hiervon liegt der Erfindung die Aufgabe zugrunde, eine Rückstromsperre der eingangs genannten Art so weiter zu entwickeln, daß auch mit geringem Aufwand bessere Misch- und Homogenisiereigenschaften erzielt werden.

Die Lösung zur Aufgabe erfolgt durch eine Rückstromsperre mit den Merkmalen des Patentanspruchs 1; die nachfolgenden Patentansprüche betreffen vorteilhafte Weiterentwicklungen der Erfindung.

Erfindungsgemäß wird vorgeschlagen, im Ringspalt zwischen dem Sperring und dem Mittelstück mindestens ein Knet- oder Mischelement anzuordnen, das als Kreisring ausgebildet ist, der koaxial zum Sperring liegt und über den Umfang verteilte Bohrungen für den Axialtransport von Material aufweist, so dass der den Ringspalt passierende Materialstrom in Umfangsrichtung aufgeteilt und damit durchmischt wird.

Zusätzlich oder alternativ kann eine am Schneckenkopf anliegende Stirnfläche des Sperrings als Mischelement mit über den Umfang verteilten und versetzt zueinander liegenden Mischbohrungen ausgebildet sein, die einen Materialstrom aufteilen und in unterschiedliche Richtungen leiten und so zu einer zusätzlichen Durchmischung führen.

Wenn die Bohrungen in den Mischelementen geneigt und/oder auch windschief zur Längsachse verlaufen, kann der Materialstrom zusätzlich in Radialrichtung bzw. Umfangsrichtung aufgeteilt werden, was zu einer weiteren Durchmischung beiträgt.

Vorzugsweise ist das Mischelement mit dem Sperring verbunden, kann aber auch mit dem Mittelstück verbunden sein.

Vorzugsweise sind mehrere Mischelemente vorgesehen, die axial entlang des Ringspaltes nebeneinander angeordnet sind. Dabei kann die Mischwirkung weiter erhöht werden, indem Bohrungen benachbarter Mischelemente in Umfangsrichtung versetzt zueinander angeordnet sind und/oder jeweils gegenüberliegende Bohrungen eine unterschiedliche Orientierung aufweisen.

Wegen der Mischelemente steigt ggf. der Druckverlust an der Rückstromsperre, und es könnte ggf. zu erhöhtem Verschleiß an dem Anschlag und den Auflageflächen an der Seite des Endstücks kommen. Dementsprechend wird vorgeschlagen, die Anschlag und/oder Auflageflächen mit einem Verschleißschutz zu versehen.

Um einen möglichen Verschleiß an der Kontaktfläche zwischen dem Schneckenkopf und dem Sperring zu vermindern, können zusätzliche Schmier- bzw. Kühlkanäle vorgesehen werden.

Eine Ausführungsform der Erfindung wird anhand der beigefügten Zeichnungen erläutert. Es zeigt:
- Fig. 1: eine Querschnittdarstellung einer erfindungsgemäßen Rückstromsperre,
- Fig. 2: eine Vorderansicht der Rückstromsperre,
- Fig. 3: eine teilweise weggebrochene Rückansicht auf das Endstück des Schneckenkopfes,
- Fig. 4: eine Detailansicht eines Anlagebereichs zwischen Schneckenkopf und Sperring,
- Fig. 5: eine Detaildarstellung einer Materialaustrittsöffnung im Sperring, und
- Fig. 6: eine Detaildarstellung des ausstoßseitigen Endes des Sperrings, wobei eine Stirnwand als Mischelement ausgebildet ist.

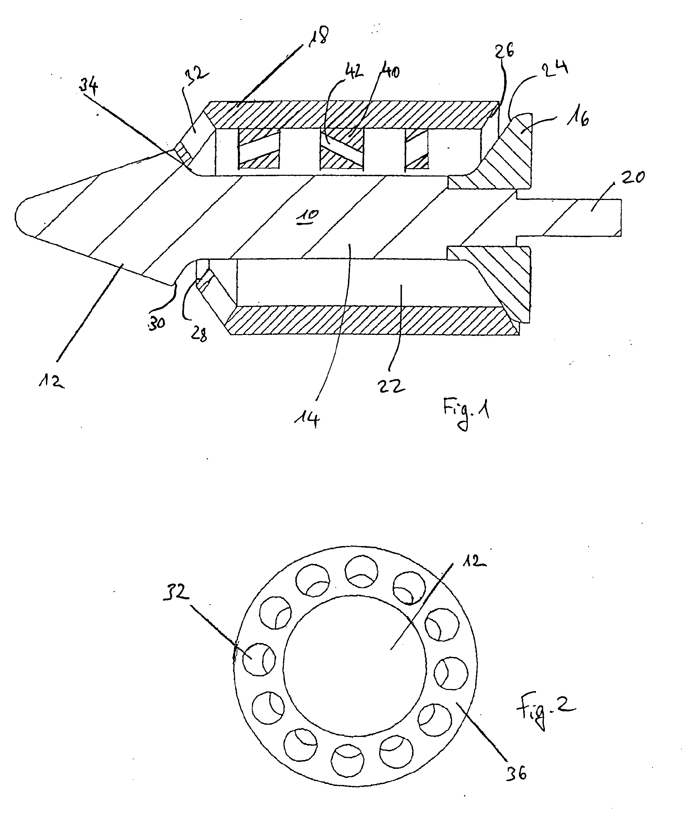

Die in Fig. 1 dargestellte Rückstromsperre umfaßt einen Schneckenkopf 10 mit einem ausstoßseitigen Endstück 12, einem zylindrischen Mittelstück 14 und einem Montageende 20 zur Montage an einem Ende einer Einspritzschnecke, wobei der Schneckenkopf 10 zwischen seinem Montageende 20 und dem Mittelstück 14 einen Druckring 16 trägt. Konzentrisch zum Mittelstück 14 ist ein Sperring 18 angeordnet und bildet zusammen mit dem Mittelstück 14 einen Ringspalt 22. Der Sperring ist an seinem ausstoßseitigen Ende (links in Fig. 1) kegelstumpfförmig ausgebildet und weist auf der Kegelstumpffläche Bohrungen 32 als Materialdurchtrittsöffnungen auf. Im Ringspalt 22 sind Mischelemente 40 in Form von Kreisringen angeordnet (nur in der oberen Hälfte der Fig. 1 dargestellt), die auf ihrem Umfang Bohrungen 42 aufweisen. Die Bohrungen sind geneigt angeordnet, so daß sie einen Materialstrom entweder vom Mittelstück weg richten oder zum Mittelstück hinrichten.

Die Bohrungen können auch windschief zur Längsachse angeordnet sein, so daß ein Materialfluß durch die Bohrungen in Umfangs- und ggf. zusätzlich in Radialrichtung erfolgt. Dazu beginnt beispielsweise eine Bohrung in der Nähe des Schneckenkopfes und endet in Radial- und Umfangsrichtung versetzt in der Nähe des Sperrings.

Der Sperring ist bezüglich des Schneckenkopfes axial verschiebbar, und zwar in eine Durchlaßstellung (obere Hälfte der Fig. 1) in der eine Anschlagfläche 30 des Endstücks 12 mit einer Kopf-Auflagefläche 28 des Sperrings 18 in Kontakt kommt, und in eine Sperrstellung (untere Hälfte der Fig. 1), in der eine Anschlagfläche 24 des Druckrings 16 mit einer Sperr-Auflagefläche 26 des Sperrings 18 in Kontakt kommt.

In der Durchlaßstellung passiert ein Materialstrom die Lücke zwischen den Flächen 24 und 26, den Ringspalt, die Bohrungen 42 und die Bohrungen 32. In der Sperrstellung befindet sich der Sperring in seiner rechten Endposition, und die Lücke zwischen den Flächen 24, 26 ist verschlossen, so daß kein Material in Richtung auf die Schnecke gepreßt werden kann.

Fig. 2 zeigt in einer Seitenansicht die Anordnung der Bohrungen 32, die auf der kegelmantelförmigen Stirnwand 36 des Sperrings 18 angeordnet sind.

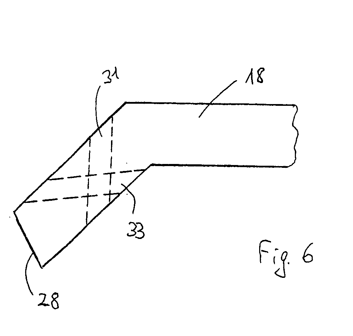

Fig. 6 zeigt eine weitere Ausführungsform der Rückstromsperre, bei der die Stirnwand des Sperrings 18 selbst als Mischelement ausgebildet ist. Dabei sind Mischbohrungen 31 und 33 vorgesehen, die in der Fig. 6 gestrichelt dargestellt sind. Beispielsweise richtet die Mischbohrung 33 den Materialstrom in Richtung auf das Endstück des Schneckenkopfes, und die Mischbohrung 31 richtet den Materialstrom auf die Wandung des Schneckenzylinders. Diese Mischbohrungen können vorteilhafterweise über den Umfang der Stirnwandung 36 verteilt jeweils einander abwechselnd angeordnet sein. Die vorstehenden Ausführungen zu den Bohrungen der Mischelemente 40 gelten hier entsprechend. Diese Ausgestaltung gemäß Fig. 6 kann abhängig vom Einsatzzweck ohne zusätzliche Mischelemente verwendet werden oder zusammen mit den in Fig. 1 dargestellten Mischelementen 40.

In den Fig. 1 und 6 ist jeweils eine Rückstromsperre dargestellt, bei der der Materialstrom durch die Stirnwand des Sperrings erfolgt. Mischelemente gemäß Fig. 1 können aber auch bei Rückstromsperren eingesetzt werden, bei denen der Materialstrom aus dem Ringspalt durch Ausnehmungen im Endstück 12 des Schneckenkopfes durchtritt und der Sperring in der Durchlaßstellung an den verbleibenden Vorsprüngen ("Füßchen") anliegt.

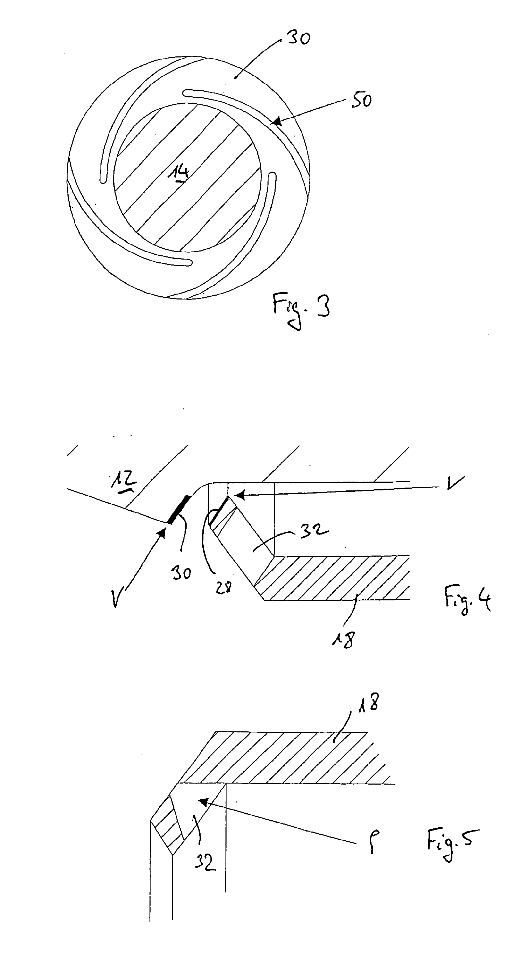

Fig. 3 zeigt das Endstück 12 in Rückansicht. Die Anschlagfläche 30 ist mit spiralarmartig verlaufenden Kühlkanälen 50 versehen. Wenn es während der Schneckenrotation zwischen dem Sperring und dem Schneckenkopf zu Reibung kommt, wird geschmolzenes Material durch den Druckverlust und die Anströmgeschwindigkeit in die Anschlagfläche 30 umgelenkt und dient somit zum Einen als Schmierfilm, zum Anderen als Kühlmittel, um Reibungswärme abzuführen.

An den Auflager- bzw. Anschlagsflächen 28, 30 kann ein Verschleißschutz V vorgesehen sein, wie in Fig. 4 dargestellt ist, beispielsweise in Form einer aufgebrachten Verschleißschutzschicht oder durch spezielle Behandlung des Materials.

Durch das Verhältnis der gesamten Sperringfläche (stirnseitig anströmbar) zur Summe der Flächen der Durchdringungen (Bohrungen, durchströmbar) kann das Schließverhalten der Rückstromsperre beeinflußt werden. Je geringer die Durchdringungsfläche (Anzahl, Querschnitt) desto besser das Schließverhalten der Rückstromsperre.

Andererseits kann damit der Druckverlust der Rückstromsperre ansteigen und damit der Verschleiß an der Kontaktfläche von Sperring und Schneckenkopf. Dem kann durch geeignete Form der Durchdringungen (z.B. Bohrungen 32) entgegengewirkt werden. Zum Beispiel könnten geeignete Formen der Konstruktion von sogenannten Lochscheiben von Granuliervorrichtungen entnommen werden; eine geeignete Form ist in Fig. 5 dargestellt.

Die Abmessungen der Mischelemente 40, die Form, Anordnung, Dimension und der Verlauf der Bohrungen 31, 32, 33 und 42 können abhängig von einem gewünschten Schließverhalten und Mischverhalten gewählt werden, wie durch die verschiedenen Ausgestaltungen der Mischelemente 40 in Fig. 1 angedeutet ist. Desweiteren ist es grundsätzlich auch möglich die Mischelemente nicht am Sperring 18 sondern am Mittelstück 14 des Schneckenkopfes anzubringen.

Schließlich sei darauf verwiesen, daß anders als in Fig. 1 dargestellt, bei einem Schneckenkopf das Montageende zusammen mit dem Druckring und dem Mittelstück einstückig ausgebildet sein kann, wobei in diesem Fall das Endstück am Mittelstück befestigt ist, beispielsweise durch Verschrauben.

## Patentansprüche

1. Rückstromsperre für eine Spritzgießmaschine mit einem Schneckenkopf (10), der ein Endstück (12), ein Mittelstück (14), einen Druckring (16) und ein Montageende (20) aufweist, sowie einen Sperrring (18), der koaxial zur Längsachse des Mittelstücks (14) angeordnet ist und zwischen einer Durchlassstellung, in der er mit einer Kopf-Anlagefläche (28) an einer Anschlagfläche (30) des Endstücks anliegt, und einer Sperrstellung, in der er mit einer Sperr-Auflagefläche (26) an einer Anschlagfläche (24) des Druckrings (16) anliegt, axial verschiebbar ist, wobei der Sperrring (18) und das Mittelstück (14) einen Ringspalt bilden, **dadurch gekennzeichnet, dass** in dem Ringspalt (22) mindestens ein Mischelement (40) angeordnet ist, das als Kreisring ausgebildet ist, der koaxial zum Sperrring (18) liegt und über den Umfang verteilte Bohrungen (42) für den Axialtransport von Material aufweist und/oder dass eine Stirnfläche (36) des Sperrrings (18) als Mischelement mit über den Umfang verteilten und in Umfangsrichtung versetzt zueinander liegenden Mischbohrungen (31,33) ausgebildet ist.

2. Rückstromsperre nach Anspruch 1, **dadurch gekennzeichnet, dass** die Bohrungen (42) des in dem Ringspalt (22) angeordneten Mischelements (40) in Bezug auf die Längsachse geneigt und/oder windschief verlaufen.

3. Rückstromsperre nach Anspruch 1 oder 2, **dadurch gekennzeichnet, dass** das Mischelement (40) mit dem Sperrring (18) verbunden ist.

4. Rückstromsperre nach Anspruch 1 oder 2, **dadurch gekennzeichnet, dass** das Mischelement (40) mit dem Mittelstück (14) verbunden ist.

5. Rückstromsperre nach einem der Ansprüche 1 bis 4, **gekennzeichnet durch** mehrere Mischelemente (40), wobei Bohrungen (42) benachbarter Mischelemente (40) versetzt zueinander angeordnet sind.

6. Rückstromsperre nach einem der Ansprüche 1 bis 5, **gekennzeichnet durch** mehrere Mischelemente (40), wobei die Bohrungen (42) benachbarter Mischelemente (40) in unterschiedlichen Richtungen verlaufen.

7. Rückstromsperre nach einem der Ansprüche 1 bis 6, **dadurch gekennzeichnet, dass** die Anschlagfläche (30) des Schneckenkopfes (10) und/oder die Anschlagfläche (24) des Druckrings Kanäle (50) aufweist.

8. Rückstromsperre nach Anspruch 7, **dadurch gekennzeichnet, dass** die Kanäle (50) in Form von nach außen offenen Spiralarmen ausgebildet sind.

9. Rückstromsperre nach Ansprüche 1 bis 8, **dadurch gekennzeichnet, dass** die Anschlagfläche (30) des Schneckenkopfes, die Anschlagfläche (24) des Druckrings, die Kopfauflagefläche (28) und/oder die Sperrauflagefläche (26) mit einem Verschleißschutz (V) versehen sind.
